# EUROPÄISCHE PATENTANMELDUNG

(11) **EP 4 124 918 A1**
(43) Veröffentlichungstag der Anmeldung: **01.02.2023**
(21) Anmeldenummer: 21188805.2
(22) Anmeldetag: 30.07.2021
(51) Int. Cl.: G05B 19/406

(54) **VERFAHREN ZUM BETREIBEN EINER WERKZEUG- UND/ODER PRODUKTIONSMASCHINE**

(71) Anmelder: Siemens Aktiengesellschaft, 80333 München (DE)
(72) Erfinder: Pitz, Thomas, 71277 Rutesheim (DE); Spielmann, Ralf, 70569 Stuttgart (DE)

(57) **Zusammenfassung**

Die Erfindung betrifft Verfahren zum Betreiben einer Werkzeug- und/oder Produktionsmaschine (1), aufweisend eine Spindel (5) und ein Werkzeug (6) zur Bearbeitung eines Werkstücks (8), wobei das Werkzeug (6), wenn die Spindel (5) rotiert und eine definierte Vorschubgeschwindigkeit des Werkzeugs (6) unterschritten wird, in eine Rückzugsposition (R) verfahren wird, derart, dass das Werkzeug (6) das Werkstück (8) nicht mehr berührt. Die Erfindung betrifft ferner eine Werkzeug- und/oder Produktionsmaschine (1) zur Durchführung des Verfahrens, ein System (3) sowie ein Computerprogrammprodukt (4).

## Beschreibung

Die Erfindung betrifft ein Verfahren zum Betreiben einer Werkzeug- und/oder Produktionsmaschine.

Beispielsweise bei einer Prototyp-Fertigung von Brennstoffzellen ist eine zerspanende Bearbeitung von Leichtbaustoffen von Interesse. Einige Leichtbaustoffe, die dort für Bauteile verwendet werden, wie beispielsweise Magnesium bzw. Magnesiumlegierungen, sind leicht entzündlich.

Dies ist besonders dann problematisch, wenn ein sich drehender Fräser auf dem Bauteil bzw. einem Werkstück verbleibt. Dann reibt der Fräser auf dem Werkstück, durch die Reibung entsteht viel Wärme und es kann anfangen zu brennen.

Auch bei der Bearbeitung von Holz besteht eine Brandgefahr durch eine durch Reibung entstehende Hitze.

Insbesondere bei der Bearbeitung von Werkstücken, die Magnesium aufweisen, ist die Gefahr eines Brands groß. Feine Späne, die bei einer derartigen Bearbeitung anfallen, sind hochentzündlich und können durch kleine Funken oder lokale Hitze-Nester entflammt werden.

Der Erfindung liegt die Aufgabe zugrunde, Brände im Bearbeitungsraum einer Werkzeugmaschine zu verhindern und eine Bearbeitung eines Werkstücks zu verbessern.

Die Lösung der Aufgabe gelingt durch Anspruch 1, d. h. ein Verfahren zum Betreiben einer Werkzeug- und/oder Produktionsmaschine, aufweisend eine Spindel und ein Werkzeug zur Bearbeitung eines Werkstücks, wobei das Werkzeug, wenn die Spindel rotiert und eine definierte Vorschubgeschwindigkeit des Werkzeugs unterschritten wird, in eine Rückzugsposition verfahren wird, derart, dass das Werkzeug das Werkstück nicht mehr berührt.

Die Rückzugsposition ist eine Position, in welcher das Werkzeug das Werkstück nicht mehr berührt.

Vorteilhaft ist eine Ausführungsform, wonach das Werkzeug, wenn die Spindel rotiert und eine definierte Vorschubgeschwindigkeit des Werkzeugs unterschritten wird, in eine Rückzugsposition verfahren wird, derart, dass eine dem Werkstück zugewandte Werkzeugspitze zum Werkstück beabstandet ist.

Das Werkzeug ist vorteilhaft an der Spindel angeordnet, insbesondere ist das Werkzeug an der Spindel befestigt.

Vorteilhaft ist die dem Werkstück zugewandte Werkzeugspitze zu einer Oberfläche des Werkstücks beabstandet.

Die Werkzeugspitze ist hierbei ein vorderes Ende des Werkzeugs, also ein Ende des Werkzeugs, welches in Richtung des Werkstücks zeigt.

Die Werkzeugspitze ist somit nicht unbedingt spitz, die Werkzeugspitze kann z. B. auch eine Schneide aufweisen.

Die Vorschubgeschwindigkeit gibt bei Werkzeug- und/oder Produktionsmaschinen eine Geschwindigkeit des Werkzeugs in Vorschubrichtung an und wird vorzugsweise in mm/min angegeben.

Eine Vorschubbewegung des Werkzeugs dient einer Bearbeitung des Werkstücks.

Der Vorschub wird vorteilhaft durch einen Vorschub wenigstens einer Achse erreicht.

Der Vorschub kann auch durch den Vorschub mehrerer Achsen erreicht werden.

Die Vorschubgeschwindigkeit kann beispielsweise durch einen Vorschub einer oder mehrerer Achsen der Werkzeug- und/oder Produktionsmaschine erreicht werden.

Die Vorschubgeschwindigkeit kann beispielsweise auch durch einen Vorschub einer oder mehrerer Achsen der Werkzeug- und/oder Produktionsmaschine sowie durch einen Vorschub einer oder mehrerer Achsen eines Roboters, welcher vorteilhaft im Arbeitsraum der Werkezug- und/oder Produktionsmaschine agiert, erreicht werden.

Wird die definierte Vorschubgeschwindigkeit unterschritten, wird das Werkzeug in die Rückzugsposition verfahren.

Die definierte Vorschubgeschwindigkeit wird beispielsweise unterschritten, wenn beim Einfahren, also einem erstmaligen Abfahren eines Bearbeitungsprogramms zur Herstellung eines Bauteils bzw. zur Bearbeitung eines Werkstücks, ein gewünschter Vorschub bzw. eine gewünschte Vorschubgeschwindigkeit nicht vom Motor der Werkzeug- und/oder Produktionsmaschine bereitgestellt werden kann.

Es ist beispielsweise möglich, dass einem Maschinenbediener (oder auch einer Steuerung) nicht bekannt ist, dass die gewünschte Vorschubgeschwindigkeit durch den Motor nicht erreichbar ist.

Das erfindungsgemäße Verfahren hat somit eine Schutzfunktion inne.

Ein anderes Beispiel ist ein Fräsen eines Quadrats in ein Holz aufweisendes Werkstück. Um z. B. die Ecken zu fräsen, muss ein Abbremsen der Vorschubgeschwindigkeit erfolgen, sodass vorteilhaft eine Vorschubgeschwindigkeit von null erreicht wird. Die Spindel rotiert jedoch weiter.

Beim Abbremsen wird hierbei die definierte Vorschubgeschwindigkeit unterschritten und gemäß erfindungsgemäßem Verfahren das Werkzeug in eine Rückzugsposition verfahren.

Die Vorschubgeschwindigkeit kann auch wenigstens im Wesentlichen von einem Moment auf den anderen gleich null sein, d. h. ohne Abbremsvorgang.

Auch wenn die Vorschubgeschwindigkeit gleich null ist, wird die definierte Vorschubgeschwindigkeit unterschritten.

Vorteilhaft ist eine Ausführung, wonach das Werkzeug in eine Richtung verfahren wird, die vom Werkstück weg weist.

Vorteilhaft ist eine Ausführung, wonach das Werkzeug in eine Z+-Richtung verfahren wird.

Die Z+-Richtung beschreibt hierbei vorteilhaft eine Fahrt in den freien Raum. Eine Z--Richtung beschreibt in diesem Zusammenhang vorteilhaft eine Fahrt, die zum Materialabtrag führt.

Dies ist von Vorteil, da dadurch nicht die Gefahr eines ungewollten Materialabtrags besteht.

Vorteilhaft ist eine Ausführung, wonach das Werkzeug in eine Werkzeugorientierungsrichtung verfahren wird.

Dies bedeutet hierbei vorteilhaft: Der Rückzug erfolgt in geneigter Stellung des Werkzeugs zum Werkstück.

Vorteilhaft ist eine Ausführung, wonach ein Abstand, der zwischen der dem Werkstück zugewandten Werkzeugspitze und Werkstück nach Verfahren in die Rückzugsposition vorliegt, wenigstens 0,001 mm und höchstens 1000 mm, insbesondere wenigstens 1 mm und höchstens 10 mm ist

Dies ist vorteilhaft, da dadurch der Abstand groß genug ist, um z. B. Brände zu vermeiden. Zugleich ist der Abstand nicht unnötig groß ist und führt somit nicht zu unnötigen Verfahrwegen.

Vorteilhaft ist eine Ausführung, wonach die definierte Vorschubgeschwindigkeit höchstens 1000 mm/min und wenigstens 50 mm/min, vorzugsweise höchstens 500 mm/min und wenigstens 100 mm/min, ist.

Dies ist vorteilhaft abhängig vom zu bearbeitenden Material.

Vorzugsweise ist die Vorschubgeschwindigkeit über Parameter vorgebbar.

Wird beispielsweise ein Holz aufweisendes Werkstück bearbeitet, ist es von Vorteil, die Spindel mit z. B. 30 000 1/min zu rotieren. Wird hierbei eine Vorschubgeschwindigkeit von z. B. 500 mm/min unterschritten, ist der beschriebene Rückzug des Werkzeugs vorteilhaft, um einen Brand zu vermeiden.

Wird beispielsweise ein Metall und/oder Magnesium aufweisendes Werkstück bearbeitet, ist eine Rotationsgeschwindigkeit der Spindel von z. B. 5 000 1/min von Vorteil. Wird hierbei eine Vorschubgeschwindigkeit von z. B. 100 mm/min unterschritten, ist der beschriebene Rückzug des Werkzeugs vorteilhaft, um einen Brand zu vermeiden.

Die Vorschubgeschwindigkeit kann auch gleich 0 sein, dann ist kein Vorschub gegeben. Auch dann ist der Rückzug des Werkzeugs von Vorteil.

Vorteilhaft ist eine Ausführungsform, wonach das Werkstück wenigstens einen hochentzündlichen oder leichtentzündlichen oder entzündlichen Stoff, insbesondere Feststoff, aufweist.

Dies ist vorteilhaft ein Stoff, der sich bei Einwirkung von Wärme bzw. Hitze leicht entzündet.

Wärme bzw. Hitze sind meist die Folge einer rotierenden Spindel, die beispielsweise während ihrer Rotation das Werkstück berührt.

Die Erfindung bannt die Gefahr eines Brandes, da auch nach Entfernen der Spindel bzw. einer Weiterfahrt der entzündete Stoff weiterbrennen oder -glimmen kann.

Die Erfindung ist von Vorteil für Werkstücke, die Holz und/oder Magnesium aufweisen, wie bereist erläutert.

Vorteilhaft ist eine Ausführungsform, wonach das Werkstück wenigstens einen durch Wärmeeintrag verformbaren Stoff aufweist.

Der Wärmeeintrag kann durch Reibung hervorgerufen werden.

Die Erfindung eignet sich besonders gut für Werkstücke, die Kunststoff aufweisen, da dieser zu fließen beginnt bzw. beginnt, sich in ungewollter Weise zu verformen, wenn ein Wärmeeintrag vorliegt. Auch dann ist der Rückzug des Werkzeugs von Vorteil.

Auch für andere Materialien ist das Verfahren geeignet.

Beispielsweise sind auch Oberflächen von Werkstücken und Werkstoffe im Allgemeinen, die mit Lösungsmittel bzw. Lösungsmitteln behandelt wurden, schnell entflammbar.

Ferner könne Harzkomponenten bei Wärmeeintrag Dämpfe entwickeln, die in Kombination mit Luft explosionsfähig sind.

Auch für diese Beispiele ist die Erfindung geeignet.

Die Erfindung bietet den Vorteil, dass Fertigungsschritte nicht gesondert an ein Material des Werkstücks angepasst werden müssen. Da ein Rückzug des Werkzeugs erfolgt, muss nicht darauf geachtet werden, ob ein Material verwendet wird, welches leicht zu brennen beginnt.

Am Beispiel eines Magnesium aufweisenden Werkstücks ist folgender Vorteil gegeben: Es ist nicht länger nötig, durch langsames Verfahren des Werkzeugs über das Werkstück und eine ausgiebige Kühlmittelzugabe einen Brand zu verhindern. Ferner ist es nicht länger nötig, hochentzündliche, feine Späne dadurch zu verhindern, dass ein CAD/CAM-System bzw. ein Maschinenbediener Parameter wie Zustelltiefe, Spanbreite, Vorschubgeschwindigkeit, Spindeldrehzahl und/oder Vorschub pro Zahn auf das Material des Werkstücks anpasst.

Wird eine definierte Vorschubgeschwindigkeit des Werkzeugs wieder überschritten, z. B. wenn durch einen Befehl ein Vorschub des Werkzeugs wieder angewiesen wird, wird das Werkzeug vorteilhaft in die vorherige Position verfahren, die eine Bearbeitung erlaubt. Die vorherige Position ist die Position, die das Werkzeug vor dem Verfahren in die Rückzugsposition hatte.

Es ist jedoch auch möglich, dass das Werkzeug in eine andere Position verfahren wird.

Das Verfahren ist von Vorteil, da dadurch ein Bearbeitungsaufwand verringert wird. Zudem werden Zeit und Kosten gespart.

Die Lösung der Aufgabe gelingt zudem durch eine Werkzeug- und/oder Produktionsmaschine zur Durchführung des beschriebenen Verfahrens, aufweisend eine Spindel und ein Werkzeug zur Bearbeitung eines Werkstücks.

Ferner gelingt die Lösung der Aufgabe durch ein System, aufweisend eine Steuerung, insbesondere numerische Steuerung, und eine Werkzeug- und/oder Produktionsmaschine.

Die Steuerung übernimmt beispielsweise folgende Aufgaben: Steuern von Fertigungsschritte, Kontrolle von Fertigungsabläufen, Speichern von Maschinen- und/oder Werkzeugdaten, Speichern von Fertigungsprogrammen und/oder grafische Simulation von Fertigungsabläufen.

Die Lösung der Aufgabe gelingt ferner durch ein Computerprogrammprodukt, umfassend Befehle, die bei der Ausführung des Programms durch die Steuerung, insbesondere numerische Steuerung, diese veranlassen, das beschriebene Verfahren auszuführen.

Das Computerprogrammprodukt ist vorteilhaft in der Steuerung hinterlegt.

Im Folgenden wird die Erfindung anhand der in den Figuren dargestellten Ausführungsbeispielen näher beschrieben und erläutert. Es zeigen:
- FIG 1: einen Verfahrensablauf,
- FIG 2: ein System,
- FIG 3: eine Werkzeug- und/oder Produktionsmaschine,
- FIG 4: eine Bearbeitungsposition,
- FIG 5: eine Rückzugsposition.

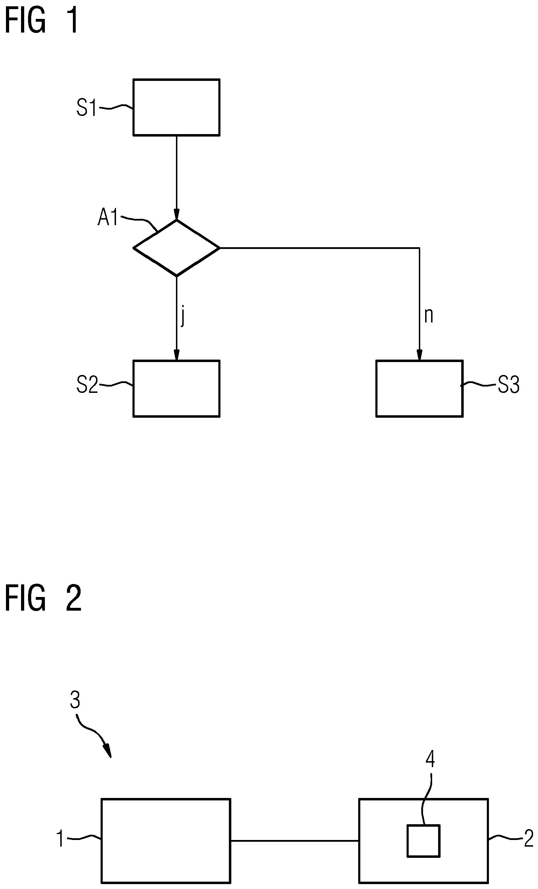

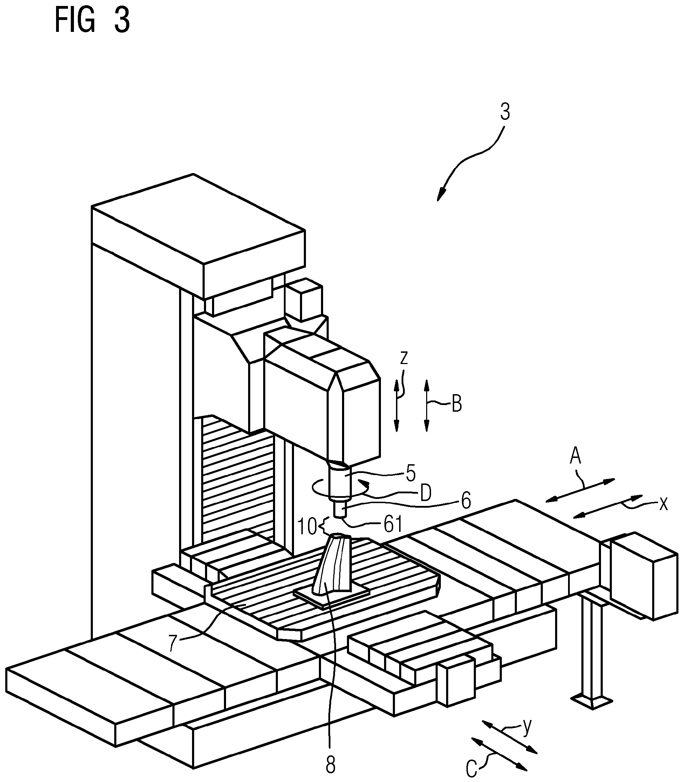

FIG 1 zeigt den Verfahrensablauf des Verfahrens zum Betreiben einer Werkzeug- und/oder Produktionsmaschine 1 (siehe FIG 3).

In einem Verfahrensschritt S1 erfolgt eine Bearbeitung eines Werkstücks 8 (siehe FIG 3).

Rotiert eine Spindel 5 (siehe FIG 3) und wird eine definierte Vorschubgeschwindigkeit eines Werkzeugs 6 (siehe FIG 3) unterschritten, dargestellt durch A1, wird im Verfahren der Pfad J verfolgt und das Werkzeug 6 in einem Verfahrensschritt S2 in eine Rückzugsposition verfahren.

Die Rückzugsposition ist derart, dass eine dem Werkstück 8 zugewandte Werkzeugspitze 61 (siehe FIG 3) zum Werkstück 8 beabstandet ist.

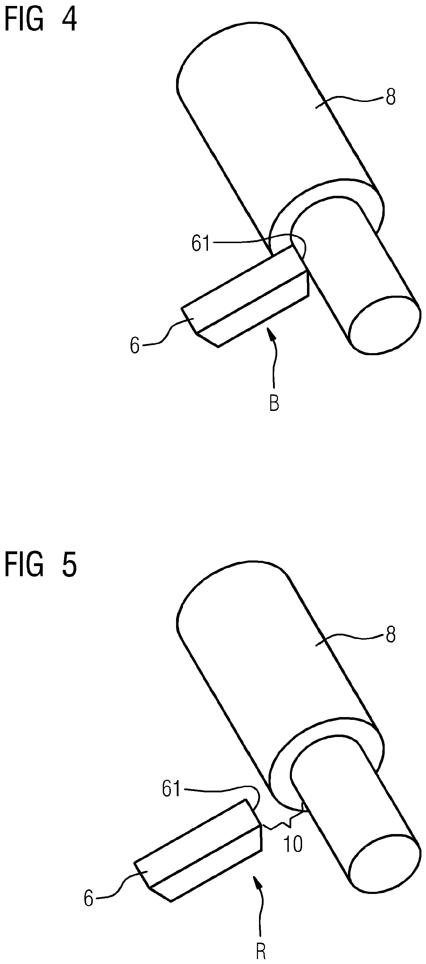

Sind die Bedingungen gemäß Abfrage A1 nicht erfüllt, wird der Pfad N verfolgt und es erfolgt in einem Verfahrensschritts S3 kein Verfahren in eine Rückzugsposition R (siehe FIG 5).

FIG 2 zeigt ein System 3, aufweisend eine Steuerung 2, insbesondere nummerische Steuerung, und die Werkzeug- und/oder Produktionsmaschine 1.

Die Figur zeigt, dass die Steuerung 2 ein Computerprogrammprodukt 4 aufweist.

Das Computerprogrammprodukt 4 umfasst Befehle, die bei der Ausführung eines Programms durch die Steuerung 2 die Steuerung veranlassen, das in FIG 1 dargestellte Verfahren auszuführen.

Vorteilhaft ist eine Mehrzahl an Befehlen in einem Programm vorhanden.

FIG 3 zeigt die Werkzeug- und/oder Produktionsmaschine 1.

Die Werkzeug- und/oder Produktionsmaschine 1 weist in der Figur eine Spindel 5 sowie einen Tisch bzw. Arbeitstisch 7 auf.

Die Spindel 5 ist mit einem Werkzeug 6 verbunden. Eine Rotation der Spindel 5 wirkt sich vorteilhaft auf das Werkzeug 6 aus, derart, dass auch das Werkzeug 6 rotiert. Eine Rotationsrichtung der Spindel 5 ist durch D gekennzeichnet.

Mittels der Werkzeug- und/oder Produktionsmaschine 1 kann das Werkstück 8 bearbeitet werden.

Hierzu stehen drei Achsen X, Y und Z bereit sowie Verfahrwege A, B, und C entlang der Achsen.

Rotiert die Spindel 5 und die Vorschubgeschwindigkeit des Werkzeugs 6 unterschreitet die definierte Vorschubgeschwindigkeit wird unterschritten, wird das Werkzeug 6 in eine Rückzugsposition verfahren. Dies wurde bereits oben erläutert.

Das Werkzeug 6 wird derart verfahren, dass eine dem Werkstück 8 zugewandte Werkzeugspitze 61 zum Werkstück 8 beabstandet ist.

Diese Distanz zwischen Werkzeugspitze 61 und Werkstück 8 ist durch das Bezugszeichen 10 gekennzeichnet.

Die Erfindung ist beispielsweise für den Fall vorteilhaft, wenn das Werkstück 8 einen hochentzündlichen bzw. leichtentzündlichen bzw. entzündlichen Stoff, insbesondere Feststoff, aufweist.

Durch das Verfahren kann die Bearbeitung derartiger Werkstücke 8 verbessert werden. Beispielsweise kann dadurch ein Einfahrvorgang sicherer gemacht werden.

Beim Einfahren von Werkstücken bzw. Bauteilen die leicht brennbare Feststoffe aufweisen, kann an kritischen Stellen die Bearbeitung mit einer sogenannten Override-Funktion die Vorschubgeschwindigkeit (auch Bahngeschwindigkeit genannt) stark reduziert werden oder sogar angehalten werden.

Lokal am Werkstück 8 kann so eine große Reibung sowie Wärme und sogar Hitze entstehen, was zur Entflammung von Spänen führen kann. Wird das Werkzeug 8 in die Rückzugsposition verfahren, kann diese Gefahr gebannt werden und ein Entflammen der Späne verhindert werden.

Das Verfahren ist zudem vorteilhaft, da ein Verschleiß des Werkzeugs 6 verhindert bzw. verzögert wird. Durch eine kontinuierliche Reibung von Werkzeug 6 mit Werkstück 8 verschleißt das Werkzeug 6 schneller.

Ein erhöhter Verschleiß ist insbesondere dann gegeben, wenn das Werkstück 8 Materialien wie beispielsweise sogenannte Sandwich-Werkstoffe mit Kohlefaser, z.B. Strukturbauteile im Automobilbau bzw. Werkstoffe für eine Flugzeugaußenhaut, bearbeitet.

Der Verschleiß kann minimiert werden, da durch das Verfahren in die Rückzugsposition bei geringer Vorschubgeschwindigkeit bzw. bei Vorschubgeschwindigkeit gleich null keine Reibung zwischen Werkstück 8 und Werkzeug 6 auftritt.

Ferner ist das Verfahren von Vorteil, wenn besondere Oberflächenanforderungen an das bearbeitete Werkstück gestellt werden.

Bei vielen Materialien ergeben sich, beispielsweise beim Fräsen, sogenannte Fräserabdrücke in Form von Ringen auf einer Fräsoberfläche. Es können sich auch durch ein Drehen hervorgerufene glänzende Ringe ergeben, wenn beispielsweise ein Drehmeisel zu lange an einer Stelle an der Oberfläche des Werkstücks 8 ohne Bahnbewegung steht bzw. wenn die Vorschubgeschwindigkeit gleich null oder sehr klein ist.

Dies kann auch als Freischneiden bezeichnet werden. Das Freischneiden ist durch das erfindungsgemäße Verfahren stark minimiert.

FIG 4 zeigt das Werkzeug 6 in einer Bearbeitungsposition B. Die Figur zeigt, dass so Material abgetragen wird.

FIG 5 zeigt das Werkzeug in der Rückzugsposition R. Es liegt der Abstand 10 zwischen der Werkzeugspitze 61 und dem Werkstück 8 vor.

## Patentansprüche

1. Verfahren zum Betreiben einer Werkzeug- und/oder Produktionsmaschine (1), aufweisend eine Spindel (5) und ein Werkzeug (6) zur Bearbeitung eines Werkstücks (8), wobei das Werkzeug (6), wenn die Spindel (5) rotiert und eine definierte Vorschubgeschwindigkeit des Werkzeugs (6) unterschritten wird, in eine Rückzugsposition (R) verfahren wird, derart, dass das Werkzeug (6) das Werkstück (8) nicht mehr berührt.

2. Verfahren nach Anspruch 1, wobei das Werkzeug (6) in die Rückzugsposition (R) verfahren wird, derart, dass eine dem Werkstück (8) zugewandte Werkzeugspitze (61) zum Werkstück (8) beabstandet ist.

3. Verfahren nach einem der vorhergehenden Ansprüche, wobei das Werkzeug (6) in eine vom Werkstück (8) weg weisende Richtung, insbesondere in Z+-Richtung, verfahren wird.

4. Verfahren nach einem der vorhergehenden Ansprüche, wobei das Werkzeug (6) in eine Werkzeugorientierungsrichtung verfahren wird.

5. Verfahren nach einem der vorhergehenden Ansprüche, wobei ein Abstand (10), der zwischen der dem Werkstück (8) zugewandten Werkzeugspitze (61) und Werkstück (8) nach Verfahren in die Rückzugsposition (R) vorliegt, wenigstens 0,001 mm und höchstens 1000 mm, insbesondere wenigstens 1 mm und höchstens 10 mm ist.

6. Verfahren nach einem der vorhergehenden Ansprüche, wobei die definierte Vorschubgeschwindigkeit höchstens 1000 mm/min und wenigstens 50 mm/min, vorzugsweise höchstens 500 mm/min und wenigstens 100 mm/min, ist.

7. Verfahren nach einem der vorhergehenden Ansprüche, wobei das Werkstück (8) wenigstens einen hochentzündlichen oder leichtentzündlichen oder entzündlichen Stoff, insbesondere Feststoff, aufweist.

8. Verfahren nach einem der vorhergehenden Ansprüche, wobei das Werkstück (8) wenigstens einen durch Wärmeeintrag verformbaren Stoff aufweist.

9. Werkzeug- und/oder Produktionsmaschine (1) zur Durchführung des Verfahrens nach einem der Ansprüche 1 bis 8, aufweisend eine Spindel (5) und ein Werkzeug (6) zur Bearbeitung eines Werkstücks (8).

10. System (3), aufweisend eine Steuerung (2), insbesondere numerische Steuerung, und eine Werkzeug- und/oder Produktionsmaschine (1) nach Anspruch 9.

11. Computerprogrammprodukt (4), umfassend Befehle, die bei der Ausführung des Programms durch eine Steuerung (2), insbesondere numerische Steuerung, diese veranlassen, das Verfahren nach einem der Ansprüche 1 bis 8 auszuführen.
